# EUROPEAN PATENT SPECIFICATION

(11) **EP 0 536 756 B1**
(45) Date of publication and mention of the grant of the patent: **27.05.1998**
(21) Application number: 92117219.3
(22) Date of filing: 08.10.1992
(51) Int. Cl.: G06F 1/24, G06F 12/06

(54) **A microcomputer and its option setting circuit**
Mikrorechner und seine Optioneneinstellungsschaltung
Micro-ordinateur et son circuit d'établissement d'options

(30) Priority: 09.10.1991 JP 290965/91
(43) Date of publication of application: 14.04.1993
(73) Proprietor: ROHM CO., LTD., Kyoto-shi Kyoto 615 (JP)
(72) Inventor: Chimura, Shigemi, c/o Rohm Co., Ltd., Kyoto-Shi, Kyoto 615 (JP)
(74) Representative: Glawe, Delfs, Moll & Partner

(56) References cited:
- EP-A- 287 337
- ICASSP 87 PROCEEDINGS vol. 1, 6 April 1987, DALLAS, USA, pages 523 - 526; KLOKER 'The Architecture and Applications of the Motorola DSP56000 Digital Signal Processor Family'
- MICROPROCESSORS AND MICROSYSTEMS vol. 3, no. 10, December 1979, LONDON, GB, pages 435 - 441; WHITWORTH 'Designing Flexibility into Memory Systems'
- EDN ELECTRICAL DESIGN NEWS. vol. 30, no. 9, April 1985, NEWTON, MASSACHUSETTS, US, page 282; FOX 'RAM-based EPROM simulator uses two ICs'

## Description

### BACKGROUND OF THE INVENTION

### 1. Field of the Invention

The present invention relates to a microcomputer, and more particularly, to an option setting circuit for setting an option of a function of the microcomputer.

### 2. Description of the Prior Art

One-chip microcomputers are provided with option setting circuits. This is because there are occasions where options are changed in accordance with the arrangements of peripheral integrated circuits (ICs) and discrete parts. Option setting circuits are also used for changing options when specifications are changed in developing a system for an IC chip for evaluating an application program for one-chip microcomputers.

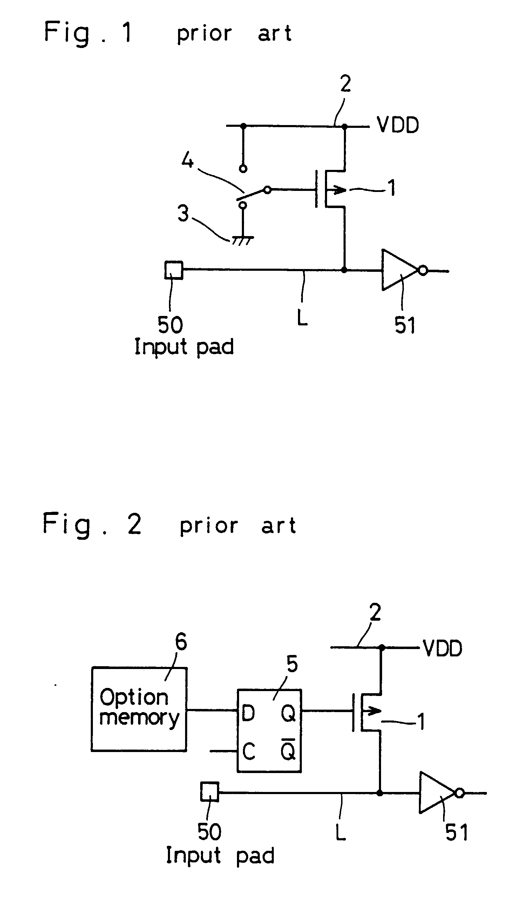

Figs. 1 and 2 show an example of a conventional option setting circuit with respect to an I/O (input/output) circuit. An I/O circuit is provided with an invertor 51 and a p-channel MOS (metal oxide semiconductor) transistor 1 for pulling up an input line L of the invertor 51 to a power supply line 2. When an input terminal of the inverter 51 is connected to an external switching circuit through an input pad 50, if the switching circuit is a CMOS (complementary metal oxide semiconductor), it is unnecessary to pull up the input terminal of the invertor 51 to the power supply line 2. This is because signals having a value of 0 and signals having a value of 1 are produced by the switching circuit and inputted into the I/O circuit. Therefore, the transistor 1 is set to OFF state.

However, if the switching circuit consists only of an n-channel MOS transistor, since only "0" signals are inputted to the input pad 50, it is required to produce "1" signals at the I/O circuit. Therefore, in that case, it is necessary that the transistor 1 be always ON. When the transistor 1 is ON, if the external switching circuit is OFF, an input of the invertor 51 is 1 (a VDD voltage of the power supply line 2), and if the external switching circuit is ON, the input of the invertor 51 is 0 since "0" signals are inputted.

As a method of setting whether to set a transistor 1 to ON state or to OFF state in setting whether to pull up the line L to the power supply line 2 or not, Fig. 1 shows a method in which whether to connect a switch 4 connected to an input of the transistor 1 to the power supply line 2 or to a ground line 3 is determined in the masking process at the time of manufacture of the microcomputer, while Fig. 2 shows a method in which ON/OFF of the transistor 1 is set by determining whether to set an output of a D-type flip-flop 5 connected to a control electrode of the transistor 1 to 1 or to 0. In the latter case, an option memory 6 is provided, and the output of the flip-flop 5 is decided based on an output data (1 or 0) of the memory 6. The condition of the transistor 1 is set based on the output.

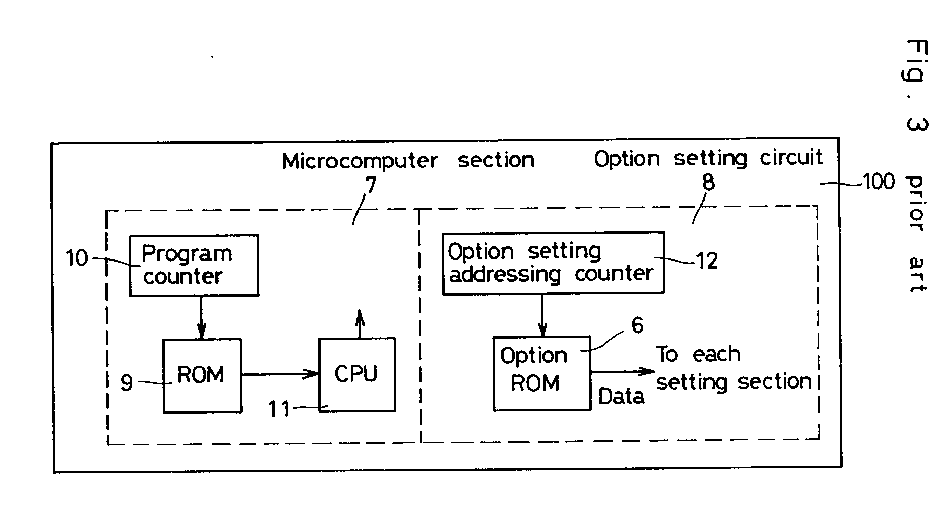

In Fig. 3, a microcomputer having the above-mentioned option memory 6 is formed as one chip 100 including a microcomputer section 7 and an option setting circuit 8. The microcomputer section 7 includes a memory (ROM [read only memory]) 9 for operation of a microcomputer, a program counter 10 which drives the memory 9, and a CPU (central processing unit) 11 which receives an output data of the memory 9. The option setting circuit 8 includes the-option memory 6 and an option setting address counter 12 which drives the memory 6.

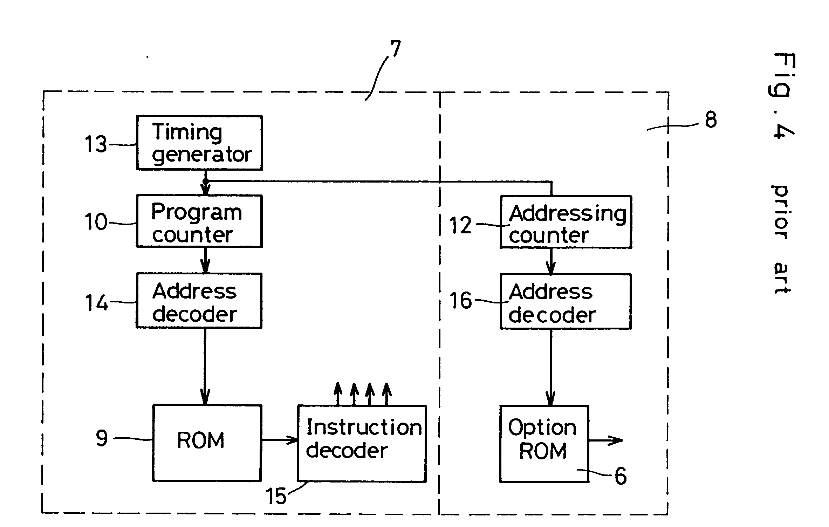

Fig. 4 shows the arrangement of the conventional option setting circuit in further detail. A timing generator 13, an address decoder 14, an instruction decoder 15 and an address decoder 16 are provided in addition to the memories 6 and 9, the program counter 10 and the address counter 12.

Since the conventional option setting circuit is provided with the addressing counter 12 and the address decoder 16 which are exclusively used for setting an output data of the option memory as described above, a larger chip is required. It is generally difficult to realize a low-cost, highly-reliable semiconductor apparatus if the circuit is large in size.

EP-A-0 287 337 discloses programmable logic device circuit (PLD) comprising:
a first memory;
a second memory for storing option data relating to a funciton of the PLD;
a memory controlling means for deactivating the first memory for a predetermined period of time after a power-on signal has been received by the PLD and activating the second memory while the first memory is being deactivated in order to retrieve said stored option data to set the options of the I/O circuit.

According to this document the setting of options is performed by a logic circuit, without using a memory for options. Therefore, it is not necessary, either, to perform addressing of the memory. In other words, it is not necessary to a method memory addressing circuit between the purposes of running a computer program and setting options.

### SUMMARY OF THE INVENTION

An object of the present invention is to provide a microcomputer having an option setting function which microcomputer is not large in circuit size and an option setting circuit for the microcomputer.

This object is achieved by an option setting circuit according to claim 1 and the microcomputer according to claim 5. The dependent claims are related to further advantageous aspects of the present invention.

With such an option setting circuit, it is unnecessary to provide an option addressing counter since one program counter is used for both the first memory for operation of the microcomputer and the second memory for an option. As a result, the circuit size can be reduced. A microcomputer can be reduced in size if such a feature is provided thereto.

### BRIEF DESCRIPTION OF THE DRAWINGS

This and other objects and features of this invention will become clear from the following description, taken in conjunction with the preferred embodiments with reference to the accompanied drawings in which:
Fig. 1 shows an example of an option of a microcomputer;
Fig. 2 shows an example of an option of a microcomputer;
Fig. 3 is a block diagram showing a principal portion of a conventional microcomputer and its option setting circuit;
Fig. 4 is a block diagram showing in further detail the conventional microcomputer and its option setting circuit;
Fig. 5 is a block diagram showing a principal portion of a microcomputer and its option setting circuit embodying the present invention;
Fig. 6 is a timing chart for explaining an operation of the microcomputer of Fig. 5; and
Fig. 7 is a circuit diagram showing an example of an option which is set by the present invention.

### DESCRIPTION OF THE PREFERRED EMBODIMENTS

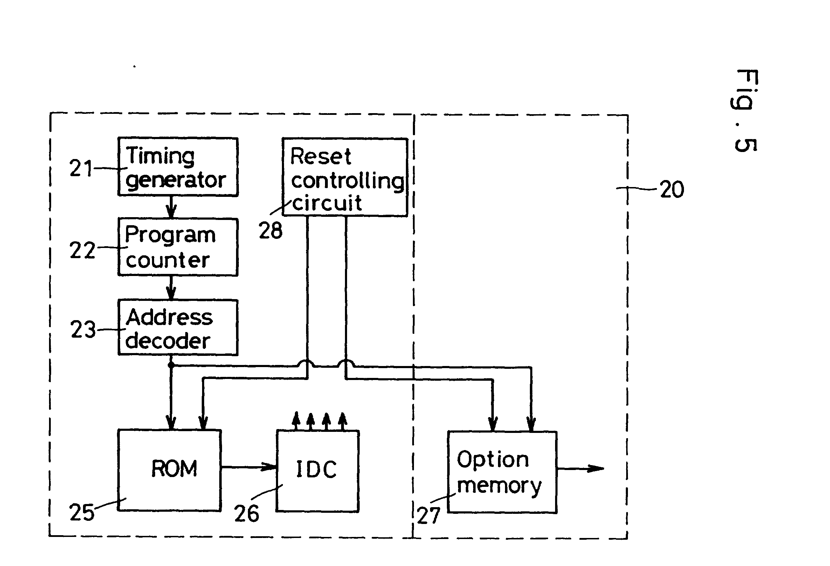

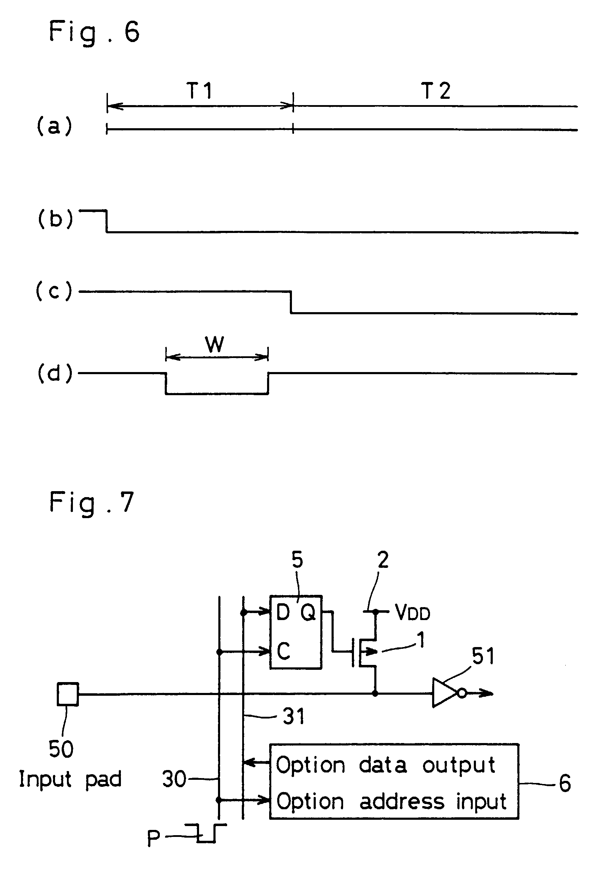

Fig. 5 shows a circuit embodying the present invention. The following are provided on one chip: a timing generator 21; a program counter 22 which operates in response to a timing signal generated by the timing generator 21; an address decoder 23 which decodes an output of the program counter 22 and provides a decoded output to a memory (ROM) 25 of the microcomputer and to an option memory 27; and a reset control signal producing circuit 28 which produces a reset control signal based on a reset signal provided from an external reset signal producing circuit and controls operation periods of the memories 25 and 27. Numeral 26 represents an instruction decoder. An output of the memory 27 is provided to a flip-flop 5 which controls a transistor 1 of an I/O circuit as shown in Fig. 7.

In the circuit of Fig. 5, when an external reset signal (b) of negative logic shown in Fig. 6 is inputted to the microcomputer from an external reset signal providing circuit, the reset control signal producing circuit 28 deactivates the memory 25 by providing a high-level voltage thereto for a predetermined period of time after a reset state set by the external reset signal is released, and activates the memory 25 thereafter. Consequently, after the reset state set by the external reset signal is released, the microcomputer is provided with a reset period T1 and an operation period T2 as shown in (a) of Fig. 6. During the reset period T1, an operation period W is provided to the memory 27 by a control signal (d) produced by the reset control signal producing circuit 28. The memory 27 outputs an option setting data based on an output of the address decoder 23 (consequently, an output of the program counter 22) during the period W to thereby set an option of the microcomputer.

While the activation and deactivation of the memories 25 and 27 are controlled by an output of the reset control signal producing circuit 28, they may be controlled by connecting a switching circuit such as a multiplexer to an output side of the address decoder and then alternatively providing to the memories 25 and 27 an output of the address decoder 23 (consequently, an output of the program counter 22) by controlling the switching circuit based on an output of the reset controlling signal producing circuit 28.

Fig. 7 shows a case where the option setting is made in an I/O circuit as shown in Fig. 2. A memory 6 and a latch circuit 5 are simultaneously opened when the level of a specified address data is changed to low by an address data bus line 30 based on an address data as shown at P. As a result, an option data is inputted from the option memory 6 to the latch circuit 5 through a data bus line 31.

Content of the option setting is not limited to the above example. A function operation or an output content may be changed as an option.

The microcomputer of the above-described embodiment may be a one-time microcomputer where a memory is molded in resin and can be written only once. Moreover, it may be a multi-time microcomputer where a memory is not molded in resin and can be rewritten any number of times.

## Claims

1. An option setting circuit for use in a microcomputer comprising:
a first memory (25) for operation of the microcomputer;
a second memory (27) for storing option data relating to a function of the microcomputer;
a program counter (22) ;
an address decoder (23) receiving the output of said program counter;
means for directing an output of the address decoder to said first memory and said second memory;
memory controlling means (28) for deactivating the first memory for a predetermined period of time after an external reset signal has been received by the microcomputer and activating the second memory while the first memory is being deactivated in order to retrieve said stored option data.

2. An option setting circuit according to claim 1, wherein the memory controlling means (28) provides an output of the program counter to the second memory during a reset period of the microcomputer.

3. An option setting circuit according to any of the preceding claims, further comprising:
an I/O circuit having a switch transistor (1) connected between a signal line and a power supply line (2);
a latch circuit (5) which latches a data from said second memory and provides a latch output to a control electrode of the switch transistor (1).

4. An option setting circuit according to claim 3, wherein the latch circuit (5) is a D-type flip-flop.

5. A microcomputer comprising an option setting circuit according to any of the preceding claims.

## Patentansprüche

1. Options-Einstellschaltung zur Verwendung in einem Mikrorechner, welche aufweist:
einen ersten Speicher (25) für den Betrieb des Mikrorechners;
einen zweiten Speicher (27) zum Speichern von Optionsdaten, die sich auf eine Funktion des Mikrorechners beziehen;
einen Programmzähler (22);
einen Adressendekodierer (23), der die Ausgabe des Programmzählers empfängt;
Mittel zum Hinleiten einer Ausgabe des Adressendekodierers zu dem ersten Speicher und dem zweiten Speicher;
Speicher-Steuerungsmittel (28) zum Deaktivieren des ersten Speichers über eine vorbestimmte Zeitdauer hinweg, nachdem ein externes Rücksetzsignal durch den Mikrorechner empfangen worden ist, und Aktivieren des zweiten Speichers, während der erste Speicher deaktiviert wird, um die gespeicherten Optionsdaten wiederzugewinnen.

2. Options-Einstellschaltung nach Anspruch 1, bei welcher das Speicher-Steuerungsmittel (28) dem zweiten Speicher während einer Rücksetzperiode des Mikrorechners eine Ausgabe des Programmzählers zuführt.

3. Options-Einstellschaltung nach einem der vorhergehenden Ansprüche, welche außerdem aufweist:
eine Eingabe/Ausgabe-Schaltung mit einem Schalttransistor (1), der zwischen einer Signalleitung und einer Stromzufuhrleitung (2) geschaltet ist;
eine Halteschaltung (5), welche Daten von dem zweiten Speicher hält und eine Halteschaltung-Ausgabe einer Steuerelektrode des Schalttransistors (1) zuführt.

4. Options-Einstellschaltung nach Anspruch 3, bei welcher die Halteschaltung (5) ein D-Flipflop ist.

5. Mikrorechner mit einer Options-Einstellschaltung nach einem der vorhergehenden Ansprüche.

## Revendications

1. Circuit d'établissement d'options pour l'utilisation dans un micro-ordinateur, comprenant:
une première mémoire (25) pour l'opération dudit micro-ordinateur;
une seconde mémoire (27) pour mémoriser des données d'options relatives à une fonction dudit micro-ordinateur;
un compteur de programmes (22);
un décodeur d'adresses (23) qui reçoit la sortie dudit compteur d'adresses;
un moyen pour diriger une sortie dudit décodeur d'adresses vers ladite première mémoire et ladite seconde mémoire;
un moyen de commande de mémoire (28) pour désactiver ladite première mémoire pour une période de temps prédéterminée après la réception, par ledit micro-ordinateur, d'un signal externe de remise à zéro et activer ladite seconde mémoire lorsque ladite première mémoire est désactivée afin d'extraire lesdites données d'options mémorisées.

2. Circuit d'établissement d'options selon la revendication 1, dans lequel ledit moyen de commande de mémoire (28) fournit une sortie dudit compteur de programmes à ladite seconde mémoire pendant une période de remise à zéro dudit micro-ordinateur.

3. Circuit d'établissement d'options selon l'une quelconque des revendications précédentes, comprenant en outre:
un circuit entrée/sortie ayant un transistor de commutation (1) relié entre une ligne de signal et une ligne d'alimentation en courant (2) ;
un circuit de maintien (5) qui maintient des données de ladite seconde mémoire et fournit une sortie de circuit de maintien à une électrode de commande dudit transistor de commutation (1).

4. Circuit d'établissement d'options selon la revendication 3, dans lequel ledit circuit de maintien (5) est une bascule D.

5. Micro-ordinateur comprenant un circuit d'établissement d'options selon l'une quelconque des revendications précédentes.
